(19) Europäisches Patentamt
European Patent Office
Office européen des brevets

(11) EP 0 940 422 B1

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.[7]: **C08G 77/38**

(21) Anmeldenummer: **99103140.2**

(22) Anmeldetag: **18.02.1999**

(54) **Verfahren zur Herstellung von (Meth)Acrylatestern von Organosiloxanpolyolen**

Method for the preparation of (meth)acrylate esters of organosiloxane polyols

Procédé de fabrication d'esters d'acides (méth)acryliques de polyols d'organosiloxane

(84) Benannte Vertragsstaaten:
**BE DE ES FR GB IT NL**

(30) Priorität: **03.03.1998 DE 19808786**

(43) Veröffentlichungstag der Anmeldung:
**08.09.1999 Patentblatt 1999/36**

(73) Patentinhaber: **Goldschmidt AG**
**45127 Essen (DE)**

(72) Erfinder:
- **Döhler, Hardi**
  **45525 Hattingen (DE)**
- **Ebbrecht, Thomas, Dr.**
  **58455 Witten (DE)**
- **Stadtmüller, Stefan, Dr.**
  **45141 Essen (DE)**

(56) Entgegenhaltungen:
**DE-C- 19 649 844** **US-A- 4 640 940**

EP 0 940 422 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der Erfindung ist ein Verfahren zur Herstellung von Organosiliciumverbindungen, die end- und/oder seitenständig mindestens einen Si-C-gebundenen organischen Rest mit mindestens zwei über primäre Hydroxylgruppen gebundene (Meth)Acrylatgruppen und gegebenenfalls Monocarbonsäuregruppen, welche frei von zur Polymerisation befähigten Doppelbindungen sind, enthalten wobei die Bindung der Acrylatgruppen enthaltenden Reste mit dem Gerüst des Organosiloxans im wesentlichen über Si-C-Bindungen unter Vermeidung von Si-O-C-Verknüpfungen erfolgt.

Polysiloxane, die Acrylatsäureestergruppen (Acrylatgruppen) enthalten, haben sich als unter energiereicher Strahlung härtbare Bindemittel, z. B. für Druckfarben und zur Herstellung von Lackbindemitteln oder für Beschichtungsmittel für Kunststoff-, Papier-, Holz- und Metalloberflächen, bewährt. Die Härtung erfolgt insbesondere durch UV-Strahlung (nach Zusatz bekannter Photoinitiatoren, wie z. B. Benzophenon und seine Derivate) oder durch Elektronenstrahlung.

Die Darstellung von Organosiloxanen mit acrylatmodifizierten organischen Gruppen, die über Si-O- und/oder über Si-C-Bindungen an die Siloxaneinheit gebunden sind, ist in zahlreichen Patentschriften beschrieben. Stellvertretend werden zum Stand der Technik die folgenden Patent- und Offenlegungsschriften genannt.

Organopolysiloxane, bei denen die acrylathaltigen organischen Gruppen über eine Si-O-C-Bindung mit dem Polysiloxangerüst verbunden sind, können nach einem Verfahren der DE-C-27 47 233 durch Umsetzung von -COH-Gruppen aufweisenden (Meth)Acrylsäureestern mit Organopolysiloxanen, die SiX-Gruppen (X = Alkoxy-, Hydroxy- oder Chlorrest) aufweisen, dadurch hergestellt werden, daß man als Organopolysiloxane solche der Formel

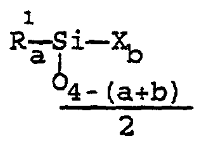

$R^1$ = Alkylgruppe mit 1 bis 4 C-Atomen und/oder eine Phenylgruppe,
x = Chlor oder eine $OR^2$-Gruppe,
$R^2$ = Alkylgruppe mit 1 bis 4 C-Atomen und/oder Wasserstoff,
a = 1,0 bis 2,0,
b = 0,02 bis 1,6,
a+b ≤ 2,66,

wobei das Siloxanmolekül 3 bis 100 Si-Atome aufweist, und als (Meth) Acrylsäureester Pentaerythrittri(meth)acrylat verwendet, wobei, bezogen auf COH- und SiX-Gruppen, 0,05 Mol bis äquimolare Mengen des Pentaerythritesters eingesetzt werden.

In einer Modifizierung dieses Verfahrens verfährt man entsprechend der DE-C-29 48 708 in der Weise, daß man Organopolysiloxane der Formel

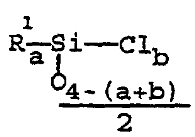

($R^1$ = Alkyl mit 1 bis 4 Kohlenstoffatomen, Vinyl und/oder Phenyl, mit der Maßgabe, daß mindestens 90 Mol-% der Gruppen $R^1$ Methyl sind, a = Wert von 1,8 bis 2,2, b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Es ist dem Fachmann geläufig, daß die acrylatmodifizierten Organopolysiloxane, bei denen die organischen

Gruppen, welche den oder die Acrylatreste tragen, über Si-C-Bindungen mit dem Siloxangerüst verbunden sind, hinsichtlich der Hydrolysestabilität den Verbindungen überlegen sind, bei denen die Verknüpfung über eine Si-O-C-Bindung erfolgt ist.

Organopolysiloxane, bei denen die acrylesterhaltigen organischen Gruppen über Si-C-Bindungen mit dem Polysiloxangerüst verbunden sind, können z. B. dadurch hergestellt werden, daß man an ein Wasserstoff siloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung acrylatmodifizierter Polysiloxane mit Si-C-Verknüpfung der modifizierenden Gruppe(n) besteht darin, daß man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Durch die zuvor beschriebenen Verfahrensweisen ist es jedoch nur möglich, jeweils eine einzige (Meth)Acrylatgruppe pro Verbindungsglied an das Siloxangerüst zu binden. Um eine möglichst gute Vernetzung, d. h. eine möglichst hohe Anzahl an reaktiven Gruppen, bei gleichzeitig so geringer Modifizierungsdichte am Siloxangerüst wie möglich zu erzielen, wäre es wünschenswert, mehr als eine (Meth) Acrylatgruppe je Verbrückungsglied anbinden zu können.

Darüber hinaus lassen solche Verbindungen die Möglichkeit zu, durch partiellen Austausch von (Mefch) Acrylsäureestergruppen durch Monocarbonsäureestergruppen, welche frei von zur Polymerisation befähigten Doppelbindungen sind, die Vernetzungsdichte der Beschichtung gezielt zu beeinflussen, ohne Gefahr zu laufen, die für die Vernetzung notwendige Mindestkonzentration an vernetzungsfähigen reaktiven Gruppen zu unterschreiten. Damit lassen sich Glastemperatur, chemische sowie physikalische Beständigkeit und Abhäsivität der Beschichtung den jeweiligen Anforderungen der Anwendungen, ausgehend vom gleichen Zwischenprodukt, anpassen. Auch das dynamische Abzugsverhalten eines Haftklebstoffes von einer abhäsiven Beschichtung ist direkt von der Vernetzungsdichte bzw. der Glastemperatur abhängig: während eine harte, hochvernetzte, abhäsive Beschichtung beim Abziehen häufig zu einem lauten, knatternden Geräusch führt, welches von oszillierenden Trennwertschwankungen herrührt (sogenannter "Slip Stick-Effekt"), verläuft der Abzug von einer weichen, flexiblen Oberfläche deutlich gleichmäßiger und damit leiser.

Solche Verbindungen sollten zugänglich sein durch die Hydrosilylierung von Si-H-funktionellen Polysiloxanen an organische Verbindungen mit mindestens drei oder mehr primären Hydroxylgruppen, von denen eine mit einem organischen Rest, welcher eine der Hydrosilylierung zugängliche Doppelbindung enthält, verethert ist, und anschließender Veresterung der freien OH-Gruppen mit (Meth) Acrylsäure oder Gemischen aus (Meth)Acrylsäure und Monocarbonsäuren, welche keine der Vernetzung zugänglichen Doppelbindungen enthalten.

In der US-A-4 640 940 wird ein Verfahren beschrieben zur Darstellung von Polyorganosiloxanen der allgemeinen Formel

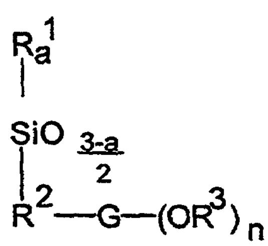
,

wobei $R^1$ ein organischer Rest ist, $R^2$ eine Alkyl- oder Alkenylgruppe; G ein n + 1-valenter Kohlenwasserstoff, Oxokohlenwasserstoff oder Polyoxokohlenwasserstoffradikal, in dem einige oder alle Wasserstoffatome durch Halogenatome ersetzt sein können; $R^3$ ist H oder eine organofunktionelle Gruppe, besonders eine polymerisierbare organofunktionelle Gruppe, eine Polymerisation beschleunigende oder initiierende Gruppe, $n \geq 2$, mit der Maßgabe, daß im Fall n = 2 und einer der Reste $R^3$ = H ist, der andere Rest $R^3$ ebenfalls H ist; a = 0, 1, 2.

Um bei der Darstellung derartiger Verbindungen die Bildung von Si-O-C-verknüpften Nebenprodukten zu unterdrücken, ist es nach Angaben der Autoren notwendig, die entsprechenden Alkohole vor der Hydrosilylierung in Gegenwart von Hexachloroplatinsäure in ein Ketal zu überführen, wobei nach der Anlagerung, vor der Veresterung, die Schutzgruppe wieder entfernt werden muß. Dies bedeutet zusätzliche Reaktionsschritte, verbunden mit zusätzlichen Energiekosten und Nebenprodukten, welche entsorgt werden müssen.

Ein weiteres Beispiel dieser Patentanmeldung beschreibt die Umkehrung der Reaktionsfolge, indem zuerst der Alkohol mit Methacrylsäure verestert wird und die Anlagerung an das Wasserstoffsiloxan anschließend erfolgt.

Eine Nacharbeitung dieser Verfahrensweisen ergab jedoch, daß die Reaktionen in anderer Weise als beschrieben ablaufen. Während bei einer Addition an die olefinische Doppelbindung ausschließlich Si-C-Verknüpfungen entstehen würden, ergaben u. a. spektroskopische Untersuchungen, daß unter den im ersten Falle angegebenen Verfahrensbedingungen ein erheblicher Anteil an Si-O-C-Verknüpfung (bis zu 50 %) unter Öffnung der Acetaleinheit gebildet worden ist. Auch die Hydrosilylierungsreaktion mit Trimethylolpropanmonoallyletherdimethacrylat erbrachte einen hohen Anteil Si-O-C-verknüpfter Additionsprodukte sowie Additionsprodukte, welche über die Hydrosilylierung der (Meth)Acrylat-Doppelbindung erhalten wurden, wodurch diese für die anschließende Strahlenvernetzung nicht mehr zur Verfügung steht.

Derartige Produkte können zwar noch durch Strahlung ausgehärtet werden, zeigen aber eine unzureichende Aushärtung sowie eine starke Abnahme des Release-Effektes bei der Lagerung. Derartige Produkte sind deshalb als abhäsive Beschichtungsmasse nicht verwendbar.

Überraschenderweise wurde gefunden, daß sich die Bildung von Si-O-C-verküpften Nebenprodukten bei der Hydrosilylierung der beschriebenen Polyhydroxyverbindungen effektiv unterdrücken läßt, wenn als Katalysator Platin- und Rhodiumkatalysatoren der Oxidationsstufen I, II und III eingesetzt werden. Davon besonders bevorzugt sind Tris (ethylendiamin)rhodium(III), Bis (triphenylphosphin) rhodiumcarbonylchlorid; 2,4-[$Rh(C_5H_7O_2)(CO)(PPh_3)$]; 2,4-Pentadionatodicarbonylrhodium(I); Tris (2,4-pentadionate)rhodium(III) ; Acetylacetonato-bis(ethylen)rhodium(I) ; Di-μ-chloro-dichlorobis (cyclohexen) diplatin(II); Di-μ-chloro-dichlorobis(ethylene)diplatin(II); 1,1-Cyclobutandicarboxylatodiamineplatin(II); Dibromo(1,5-cyclooctadiene)platin(II); cis-Dichlorobis(pyridine)platin(II); Dichlorobis(1,5-cyclooctadiene)platin(II); Dichloro(dicyclopentadienyl)platin(II).

Gegenstand der vorliegenden Erfindung ist daher ein Verfahren zur Herstellung von (Meth) Acrylatgruppen enthaltenden Organopolysiloxanen welches dadurch gekennzeichnet ist, daß man wasserstoffunktionelle Siloxane der allgemeinen Formel I

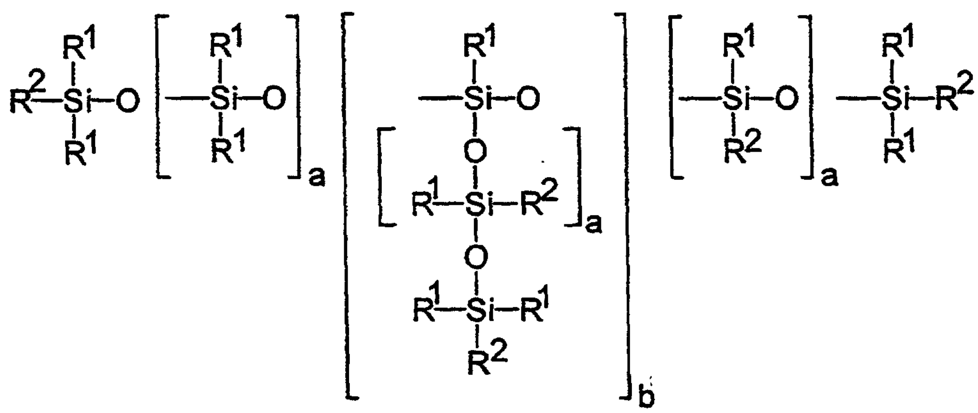

(I)

$R^1$ = gleiche oder verschiedene, aliphatische oder aromatische Kohlenwasserstoffreste mit 1 bis 10 C-Atomen,
$R^2$ = $R^1$ oder H, mit der Maßgabe, daß mindestens ein Rest $R^2$ gleich H ist,
a = 0 bis 500,
b = 0 bis 5,

an Polyhydroxyalkenylether der allgemeinen Formel II

$$H_2C=CH-(CH_2)_c-O-CH_2-R^3-(CH_2-OH)_d$$

(II)

$R^3$ = ein ggf. Etherbrücken enthaltender linearer, cyclischer, aromatischer oder verzweigter Kohlenwasserstoffrest mit 1 bis 20 C-Atomen,
c = 0 bis 10,
d = 2 bis 10,

in Gegenwart von Platin- oder Rhodiumkatalysatoren der Oxidationsstufen I, II und III anlagert und anschließend die

OH-Gruppen mit, bezogen auf Hydroxylgruppen, 0,4- bis 1molaren Mengen (Meth)Acrylsäure und 0- bis 0,6molaren Mengen einer Monocarbonsäure mit 2 bis 10 Kohlenstoffatomen, welche frei von zur Polymerisation befähigten Doppelbindungen ist, unter üblichen Veresterungsbedingungen umsetzt.

Die durch die Indices a und b definierte Struktur der hydroxyfunktionellen Organopolysiloxane bleibt auch nach der Umsetzung mit der (Meth)Acrylsäure und anderen Monocarbonsäuren erhalten.

$R^1$ kann innerhalb des polymeren Moleküls gleich oder verschieden sein und die Bedeutung eines niederen Alkylrestes mit 1 bis 10 C-Atomen oder eines Phenylrestes haben. Die Alkylreste können geradkettig oder verzweigt vorliegen. Vorzugsweise sind mindestens 90 % der Reste $R^1$ Methylreste. Beispiele für den Rest $R^3$ sind Alkylreste mit 1 bis 20 C-Atomen, bevorzugt 1 bis 10, besonders bevorzugt 3 bis 8 C-Atomen. Der Index c ist vorzugsweise 0 bis 5, d ist vorzugsweise 2 bis 6. Insbesondere bevorzugt ist c = 1 und d = 2 bis 5.

Vorteile des erfindungsgemäßen Verfahrens bzw. der erfindungsgemäß erhaltenen (Meth)Acrylatgruppen enthaltenden Organopolysiloxane sind somit:

1. Die Bildung von Si-O-C-verknüpften Nebenprodukten wird effektiv unterdrückt, die erhaltenen Produkte besitzen eine ausgezeichnete Lagerstabilität.

2. Es werden keine zusätzlichen Reaktionsschritte für die Einführung bzw. Entfernung von Schutzgruppen benötigt.

3. Je Brückenglied, welches mit dem Siloxangerüst über eine Si-C-Bindung verknüpft ist, kann mehr als eine der Vernetzung zugängliche (Meth)Acrylateinheit angebunden werden, wodurch eine erhöhte Reaktivität bei möglichst geringer Modifizierungsdichte gegeben ist.

4. Durch Wahl des bei der Veresterung eingesetzten Gemisches aus (Meth)Acrylsäure und Monocarbonsäuren, welche keine der Vernetzung zugänglichen Doppelbindungen enthalten, lassen sich im Endprodukt gezielt anwendungstechnische Eigenschaften, wie z. B. Vernetzungsdichte, Glastemperatur, Härte der Beschichtung, einstellen, ohne Gefahr zu laufen, die für die Vernetzung notwendige Mindestkonzentration an vernetzungsfähigen, reaktiven Gruppen zu unterschreiten.

5. Die Aushärtung der Produkte auf Trägermaterial ist mit hoher Geschwindigkeit möglich; eine Veränderung der Abhäsivität der ausgehärteten Produkte bei der Lagerung, erkennbar durch den Anstieg der Trennwerte, ist nicht oder nur in geringem Umfang gegeben.

Beispiele für erfindungsgemäß einsetzbare Polyhydroxyalkenylether der Formel II, die sowohl über mindestens eine hydrosilylierbare Doppelbindung als auch über mindestens zwei veresterbare primäre Hydroxylgruppen verfügen, sind:

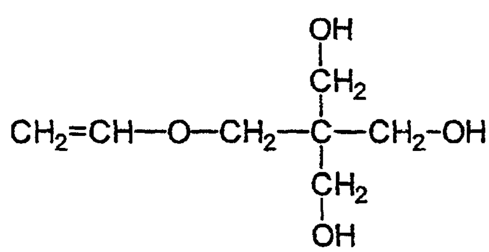

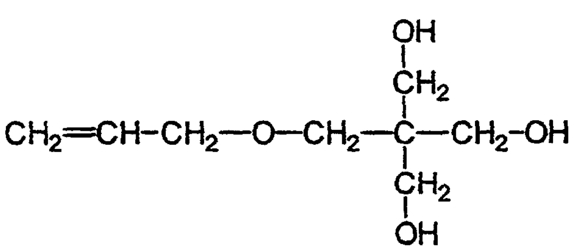

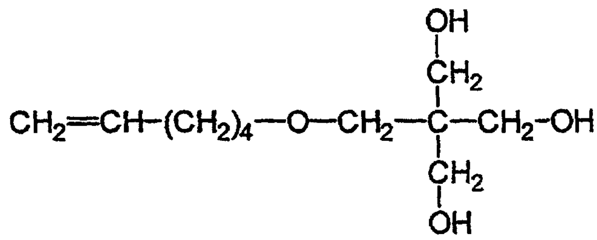

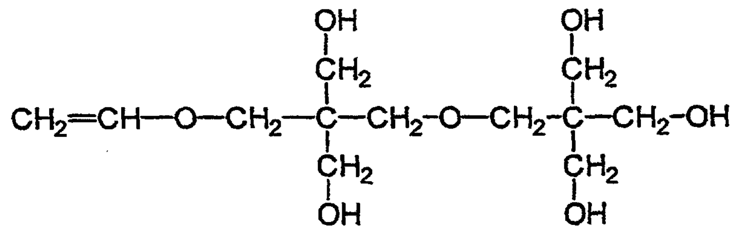

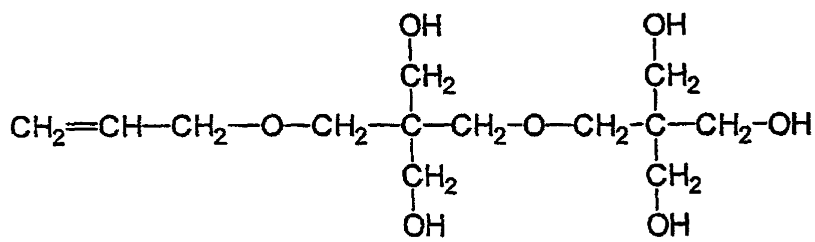

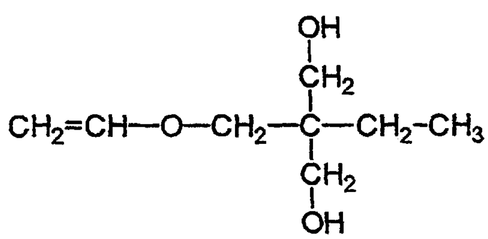

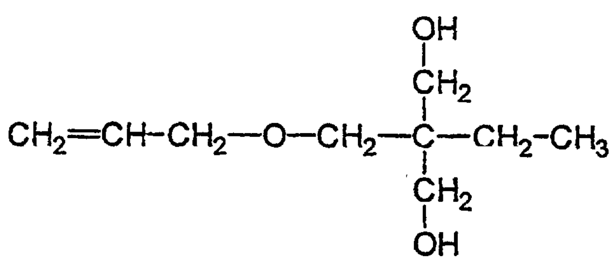

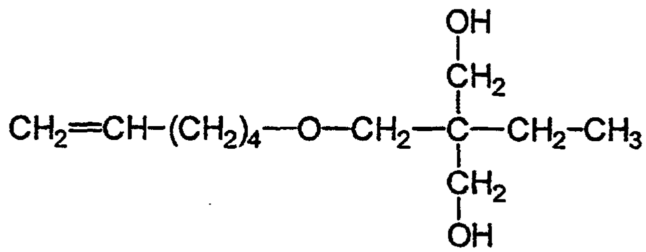

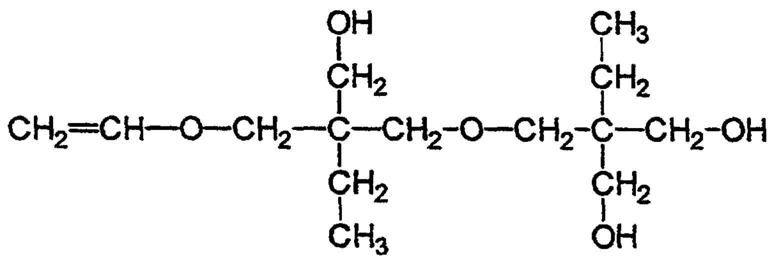

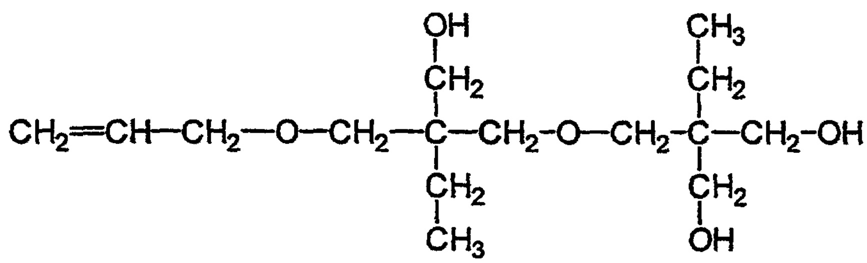

Nach der Veresterungsreaktion mit (Meth)Acrylsäure oder einem Gemisch aus (Meth)Acrylsäure und Carbonsäuren, dem Stand der Technik entsprechend, unter azeotroper Abtrennung der stöchiometrischen Menge an gebildetem Wasser, kann in Gegenwart eines aciden Katalysators das Siloxangerüst auf entsprechend höhere Siloxankettenlängen equilibriert werden.

Es ist dem Fachmann geläufig, daß die Verbindungen in Form eines Gemisches mit einer im wesentlichen durch statistische Gesetze geregelten Verteilung vorliegen. Die Werte für die Indices a und b stellen deshalb Mittelwerte dar.

Beispiele erfindungsgemäß hergestellter Verbindungen sind:

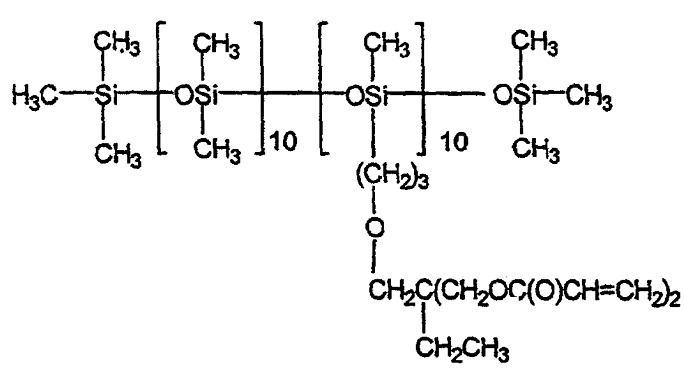

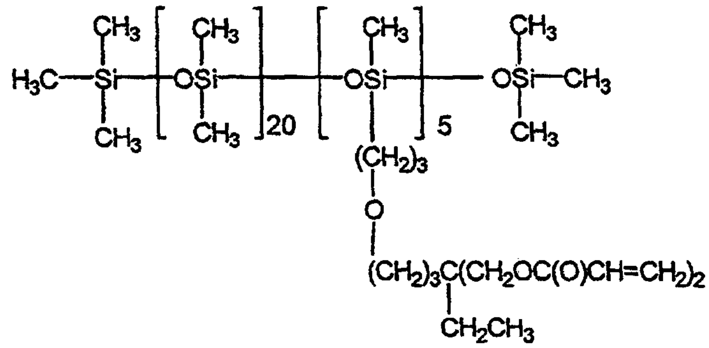

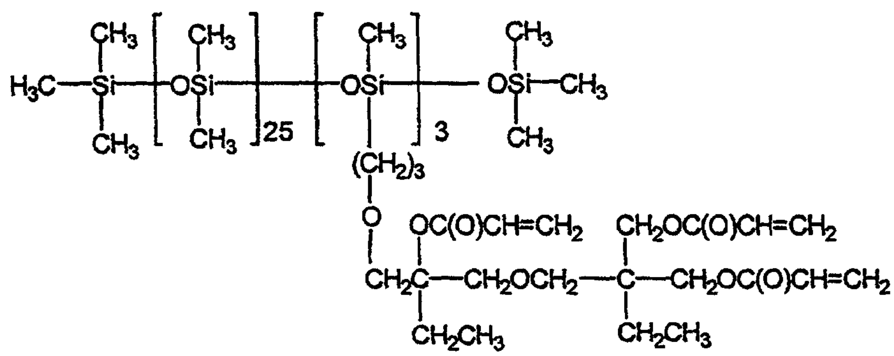

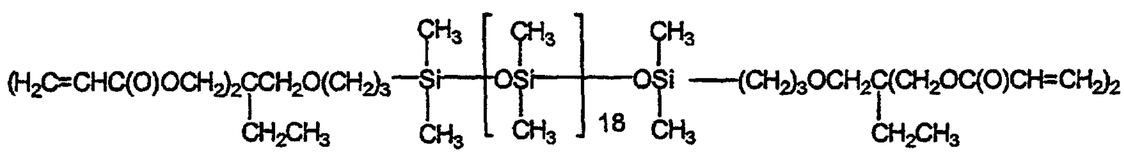

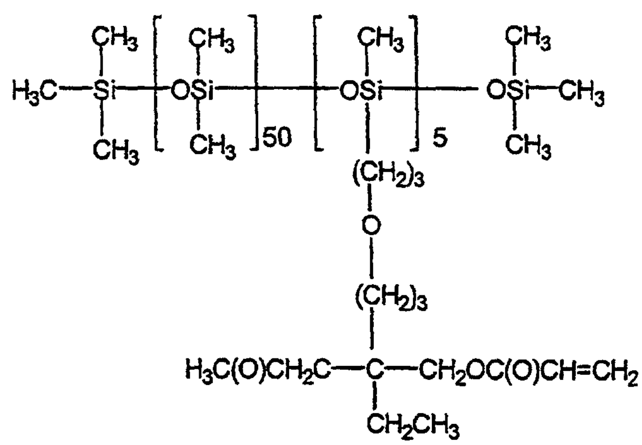

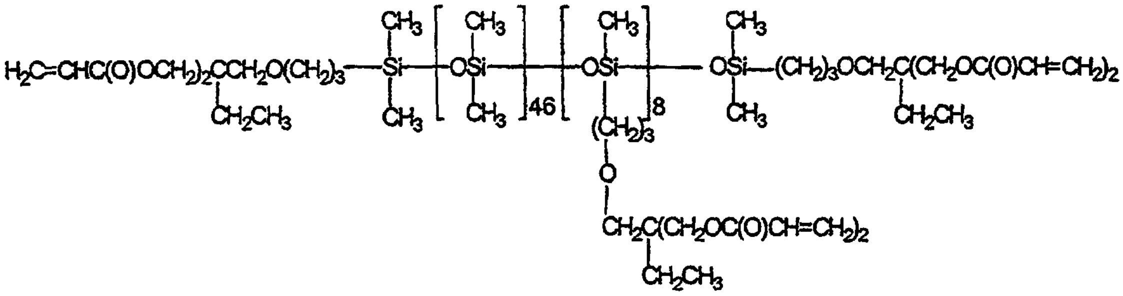

Die erfindungsgemäß hergestellten Verbindungen können als strahlenhärtende Beschichtungsmassen oder als Additive in solchen Systemen eingesetzt werden. Sie können in üblicher Weise mit Härtungsinitiatoren, Füllstoffen, Pigmenten, anderen an sich bekannten Acrylatsystemen und weiteren üblichen Zusatzstoffen compoundiert werden. Die erfindungsgemäß hergestellten Verbindungen können dreidimensional durch freie Radikale vernetzt werden und härten thermisch unter Zusatz von z. B. Peroxiden oder unter Einfluß energiereicher Strahlung, wie UV- oder Elektronenstrahlung, innerhalb kürzester Zeit zu mechanisch und chemisch widerstandsfähigen Schichten aus, die bei geeigneter Zusammensetzung der erfindungsgemäßen Verbindungen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivate, oder Benzoin und entsprechende substituierte Benzoinderivate.

Photoinitiatoren und/oder Photosensibilisatoren werden in den die erfindungsgemäßen Organopolysiloxane enthaltenden Zusammensetzungen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane, verwendet.

Nachfolgende Beispiele sollen zur Verdeutlichung der Erfindung dienen, sie stellen jedoch keinerlei Einschränkung dar.

Beispiel 1

a) Anlagerung von 1,1,1-Tris-(hydroxymethyl)-propan-monoallyl-ether an ein seitenständig Si-H-funktionelles Siloxan

452 g (+ 30 % Überschuß) 1,1,1-Tris-(hydroxymethyl)-propan-monoallylether werden in einem 1-1-Vierhalskolben, ausgestattet mit Intensivkühler, Thermometer und Tropftrichter, zusammen mit 10 ppm Diaminocyclobutandicarboxylatoplatin als Katalysator in inerter Atmosphäre auf 100 °C aufgeheizt. Bei Erreichen der Temperatur werden 672 g endständig Si-H-funktionalisiertes Polydimethylsiloxan der mittleren Kettenlänge N = 10 und der allgemeinen Formel $HMe_2SiO(SiMe_2O)_8SiMe_2H$ innerhalb von 30 Minuten zugetropft. Nach beendeter Zugabe wird das Reaktionsgemisch noch solange bei 100 °C gerührt, bis nach ca. 3 Std. der Umsatz > 99,5 % erreicht wird.

Nach Filtration von Katalysatorresten und Abdestillation der flüchtigen Reaktionsnebenprodukte bei 150 °C/ 0,1 bar erhält man ein niedrigviskoses Öl, ca. 350 mPas, dem laut $^1H$- und $^{29}Si$-NMR-Spektren die allgemeine Formel zukommt:

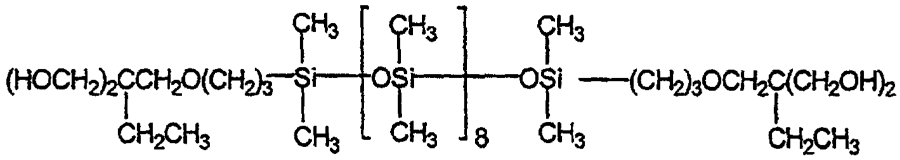

b) Acrylierung des Bishydroxyalkylsiloxans

In einem 1-1-Vierhalskolben mit Rührer, Tropftrichter und Thermometer werden 325 g des unter 1a) beschriebenen α,ω-Bis-hydroxyalkylsiloxans zusammen mit 230 ml Cyclohexan und 0,35 g Hydroxyanisol auf 65 °C aufgeheizt. Bei dieser Temperatur werden 0,5 % Trifluormethansulfonsäure zugegeben und anschließend insgesamt 135 g Acrylsäure (20 % Überschuß) zugetropft. Das Kondensationswasser wird mittels eines Wasserabscheiders abgetrennt. Die Reaktionsdauer beträgt ca. 3 Stunden. Anschließend wird das Reaktionsgemisch mit einer 2 %igen Natriumcarbonatlösung neutralisiert, filtriert und destilliert.

Gemäß $^{29}$Si-NMR- und $^{13}$C-NMR-spektroskopischer Ergebnisse besitzt das Endprodukt nachfolgende Struktur:

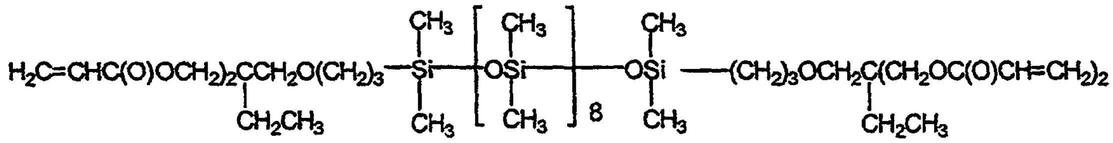

<u>Beispiel 2</u>

In analoger Weise wie in Beispiel 1 beschrieben werden 238 g eines seitenständig Si-H-funktionalisierten Polydimethylsiloxans der mittleren Kettenlänge N = 10 und der allgemeinen Formel $Me_3SiO(SiMe_2O)_s(SiHMe_2)_3SiMe_3$ mit 226 g 1,1,1-Tris-(hydroxy-methyl)-propanmonoallylether unter Verwendung von 10 ppm cis-Dichlorobis(pyridine) platin und 23 g n-Butanol umgesetzt. Nach 5 Std. Rühren bei 100 °C liegt der Umsatz > 99,5 %.

Zur Veresterung des Hydroxyalkylsiloxans mit Acrylsäure werden analog wie in Beispiel 1b) beschrieben 220 g des endständigen Hydroxyalkylsiloxans mit 53 g Acrylsäure (20 % Überschuß) in 140 ml Cyclohexan unter Zusatz von 100 ppm Methylhydrochinon und 0,5 % Trifluormethansulfonsäure umgesetzt. Die Aufarbeitung des Reaktionsproduktes erfolgt durch Neutralisation mit einer 2 %igen Natriumcarbonatlösung, Filtration und Destillation.

Gemäß 29Si-NMR- und $^{13}$C-NMR-spektroskopischer Ergebnisse besitzt das Endprodukt nachfolgende Struktur:

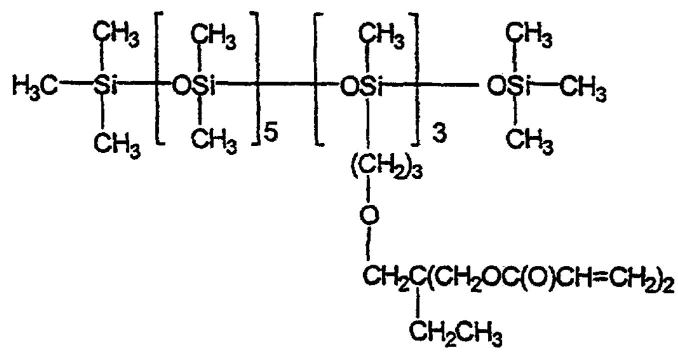

<u>Beispiel 3</u>

Equilibrierung von Acrylsäureestergruppen-haltigen Polysiloxanen auf höhere Kettenlängen

150 g der in Beispiel 1b) beschriebenen Verbindung werden zusammen mit 802 g Gemisch aus Octamethylcyclotetrasiloxan und Decamethylcyclopentasiloxan sowie 0,7 g Trifluormethansulfonsäure 10 Stunden bei 60 °C reagieren gelassen. Anschließend werden 14 g Natriumhydrogencarbonat zugegeben und 2 Stunden bei 60 °C Raumtemperatur gerührt. Nach Filtration und Abziehen der flüchtigen Reaktionsprodukte bei 120 °C/0,1 mbar erhält man eine niedrigviskose Flüssigkeit.

Gemäß $^{29}$Si-NMR- und $^{13}$C-NMR-spektroskopischer Ergebnisse besitzt das Endprodukt nachfolgende Struktur:

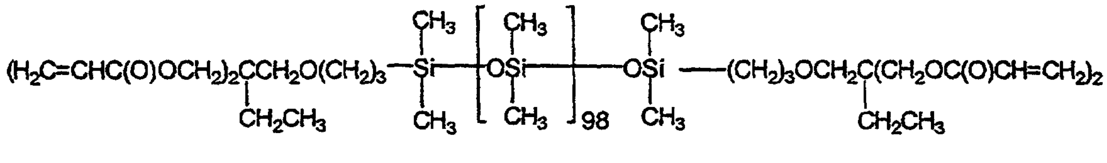

Beispiel 4

Die Arbeitsweise von Beispiel la) wird wiederholt mit der Abänderung, daß anstelle von 1,1,1-Tris-(hydroxymethyl)-propan-mo-noallylether 4-Ethyl-4-(allyloxymethyl)-2,2-dimethyl-1/3-dioxan eingesetzt wird und auf n-Butanol als Cokatalysator verzichtet wird. Die Hexachloroplatinsäure wird als 2 %ige Lösung zu dem Ethylacetat dosiert.
Die spektroskopische Auswertung mittels $^{13}C$- und $^{29}Si$-NMR des Reaktionsproduktes nach der Aufarbeitung ergibt einen Anteil von Si-O-C-verknüpften Reaktionsprodukten von 90 % und einen Anteil von Si-C-verknüpften Reaktionsprodukten, der unter 10 % liegt.

Beispiel 5

Die Arbeitsweise von 1b) wird dahingehend abgeändert, daß zur Veresterung von 200 g des unter 2 beschriebenen Bishydroxysiloxans ein Gemisch aus 116 g Acrylsäure und 25 g Essigsäure verwendet wird. Nach vierstündiger Reaktionsdauer und Aufarbeitung wie oben beschrieben wird ein Produkt erhalten, dem nach Auswertung der spektroskopischen Daten folgende Struktur zugeordnet werden kann:

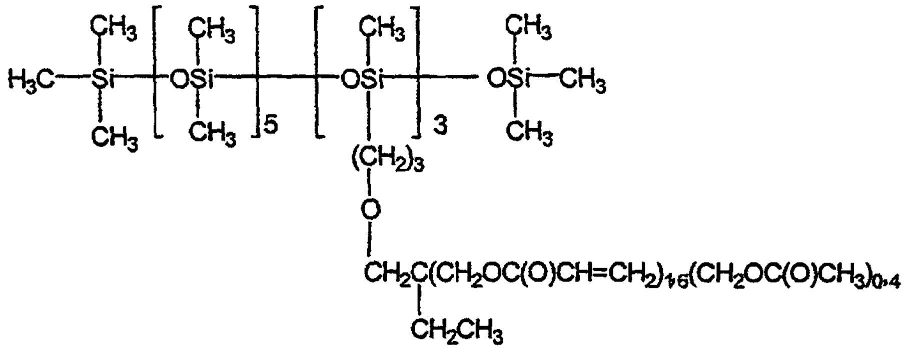

Anwendungstechnische Überprüfung

Zur Überprüfung der anwendungstechnischen Eigenschaften der erfindungsgemäß hergestellten Substanzen werden die Produkte der Beispiele sowie die der nicht erfindungsgemäß hergestellten,Vergleichsbeispiele auf flächige Träger (orientierte Polypropylenfolie) aufgetragen und nach Zugabe von 2 % Photoinitiator (Darocur® 1173, Ciba Geigy) durch Einwirkung von UV-Licht mit 120 W/cm bei einer Bahngeschwindigkeit von 20 m/min gehärtet. Die Auftragsmenge beträgt in jedem Fall ca. 1 $g/m^2$.

Trennwert

Für die Ermittlung der Trennwerte werden verschiedene, 25 mm breite Klebebänder der Firma Beiersdorf verwendet, und zwar ein mit Acrylatkleber beschichtetes Klebeband, das im Handel unter der Bezeichnung TESA® 7475 erhältlich ist, sowie mit Kautschukkleber beschichtete Klebebänder, welche im Handel unter den Bezeichnungen TESA® 4154 und TESA® 7476 erhältlich sind.
Zur Messung der Abhäsivität werden diese Klebebänder auf den Untergrund aufgewalzt und anschließend bei 40 °C unter einem Gewicht von 70 $g/cm^2$ gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft oder Trennwert bezeichnet. Die allgemeine Testprozedur entspricht im wesentlichen der FINAT Testmethode Nr. 10. Zur Überprüfung des Alterungsverhaltens wird die Lagerzeit auf 7 und 14 Tage unter den oben beschriebenen Bedingungen verlängert.

Loop-Test

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf dreimal auf den Untergrund aufgewalzt und sofort wieder von Hand abgezogen. Dann wird durch Zusammenlegen der Enden des Klebebandes eine Schlaufe gebildet, so daß die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

Restklebkraft

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm$^2$ gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben.

| Beispiel | Loop-Test | Restklebkraft % | Trennwert TESA® 7475 N/2,5 cm | Trennwert TESA® 7476 N/2,5 cm | Trennwert TESA® 4154 N/2,5 cm |
|---|---|---|---|---|---|
| 1 b | i.O. | 97 | 2,9 | 5,4 | 3,1 |
| 2 | i.O. | 95 | 2,5 | 5,2 | 2,8 |
| 3 | i.O. | 91 | 0,1 | 0,4 | 0,1 |
| 4 | Nicht i.O. | 52 | n.b. | n.b. | n.b. |
| 5 | i.O. | 92 | 2,0 | 4,9 | 2,9 |

i.O. = in Ordnung
n.b. = nicht bestimmbar

## Patentansprüche

1. Verfahren zur Herstellung von (Meth)Acrylatgruppen enthaltenden Organopolysiloxanen dadurch gekennzeichnet, daß man wasserstoffunktionelle Siloxane der allgemeinen Formel I

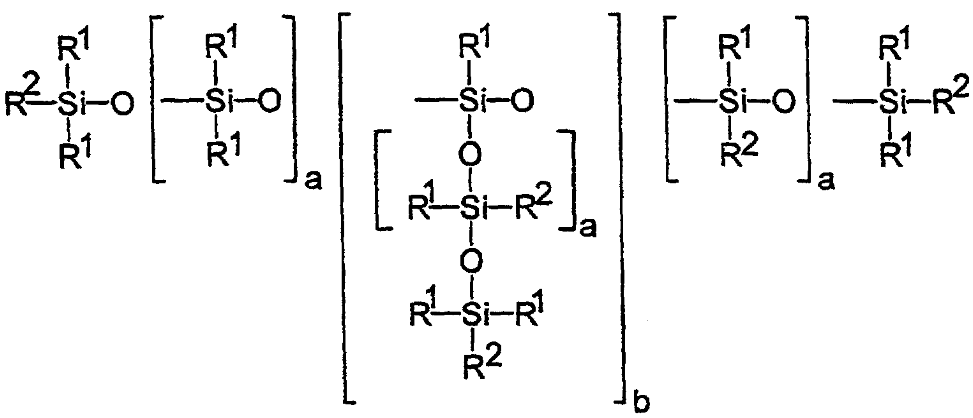

(I)

$R^1$ = gleiche oder verschiedene, aliphatische oder aromatische Kohlenwasserstoffreste mit 1 bis 10 C-Atomen,
$R^2$ = $R^1$ oder H, mit der Maßgabe, daß mindestens ein Rest $R^2$ gleich H ist,
a = 0 bis 500,
b = 0 bis 5,

an Polyhydroxyalkenylether der allgemeinen Formel II

$$H_2C=CH-(CH_2)_c-O-CH_2-R^3-(CH_2-OH)_d$$

(II)

$R^3$ = ein ggf. Etherbrücken enthaltender linearer, cyclischer, aromatischer oder verzweigter Kohlenwasserstoffrest mit 1 bis 20 C-Atomen,
c = 0 bis 10,
d = 2 bis 10,

in Gegenwart von Platin- oder Rhodiumkatalysatoren der Oxidationsstufen I, II und III anlagert und anschließend die OH-Gruppen mit, bezogen auf Hydroxylgruppen, 0,4- bis Imolaren Mengen (Meth)Acrylsäure und 0- bis 0,6molaren Mengen einer Monocarbonsäure mit 2 bis 10 Kohlenstoffatomen, welche frei von zur Polymerisation befähigten Doppelbindungen ist, unter üblichen Veresterungsbedingungen umsetzt.

**2.** Verfahren zur Herstellung von (Meth)Acrylatgruppen enthaltenden Organopolysiloxanen gemäß Anspruch 1, dadurch gekennzeichnet, daß man die Hydrosilylierung in Gegenwart eines der Katalysatoren aus der Gruppe Tris (ethylendiamin)rhodium(III), Bis (triphenylphosphin) rhodiumcarbonylchlorid; 2,4-[Rh($C_5H_7O_2$)(CO)($PPh_3$)]; 2,4-Pentadionatodicarbonyl)rhodium(I); Tris-(2,4-pentadionate)rhodium(III); Acetylacetonatobis(ethylen)rhodium (I); Di-μ-chloro-dichlorobis (cyclohexen) diplatin (II); Di-μ-chloro-di-chlorobis(ethylene)diplatin(II); 1,1-Cyclobutandicarboxylato-diamineplatin(II); Dibromo-(1,5-cyclooctadiene)-platin(II); cis-Dichlorobis(pyridine)platin(II); Dichlorobis-(1,5-cyclooctadiene)platin(II); Dichloro(dicyclopentadienyl)-platin(II) durchführt.

**3.** Verfahren gemäß Anspruch 1, dadurch gekennzeichnet, daß, bezogen auf Hydroxylgruppen, das molare Verhältnis der (Meth)Acrylsäure zur Monocarbonsäure, welche frei von zur Polymerisation befähigten Doppelbindungen ist, 0,5 : 0,5 bis 0,9 : 0,1 beträgt.

## Claims

**1.** Process for preparing organopolysiloxanes which contain (meth)acrylate groups, characterized in that hydrogen-functional siloxanes of the general formula I

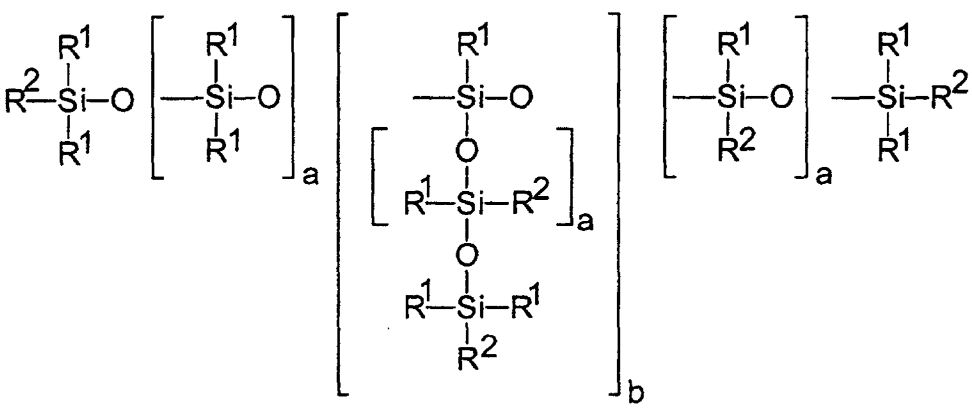

(I)

$R^1$ = identical or different, aliphatic or aromatic hydrocarbon radicals of 1 to 10 carbon atoms,
$R^2$ = $R^1$ or H, with the proviso that at least one radical $R^2$ is H,
a = from 0 to 500,
b = from 0 to 5,

are subjected to an addition reaction with a polyhydroxy alkenyl ether of the general formula II

$$H_2C=CH-(CH_2)_c-O-CH_2-R^3-(CH_2-OH)_d$$

(II)

$R^3$ = a linear, cyclic, aromatic or branched hydrocarbon radical (with or without ether bridges) of 1 to 20 carbon atoms,
c = from 0 to 10,
d = from 2 to 10,

in the presence of platinum or rhodium catalysts of oxidation states I, II and III and subsequent reaction of the OH groups with - based on hydroxyl groups - from 0.4- to 1-molar amounts of (meth)acrylic acid and from 0- to 0.6-molar amounts of a monocarboxylic acid of 2 to 10 carbon atoms which is free from double bonds that are capable of undergoing addition polymerization, said subsequent reaction taking place under customary esterification conditions.

**2.** Process for preparing organopolysiloxanes which contain (meth)acrylate groups according to Claim 1, characterized in that the hydrosilylation is conducted in the presence of a catalyst selected from the group consisting of tris (ethylenediamine)rhodium(III), bis(triphenylphosphine)rhodium carbonyl chloride; 2,4-[Rh($C_5H_7O_2$) (CO) ($PPh_3$)]; 2,4-pentanedionatodicarbonylrhodium(I); tris(2,4-pentanedionato)rhodium(III); acetylacetonatobis(ethylene)rhodium(I); di-μ-chlorodichlorobis(cyclohexene)diplatinum(II); di-μ-chlorodichlorobis(ethylene)diplatinum(II); 1,1-cyclobutanedicarboxylatodiamineplatinum(II); dibromo(1,5-cyclooctadiene)platinum(II); cis-dichlorobis(pyridine)-platinum(II); dichlorobis(1,5-cyclooctadiene)-platinum(II); and dichloro(dicyclopentadienyl)platinum(II).

**3.** Process according to Claim 1, characterized in that

- based on hydroxyl groups - the molar ratio of meth(acrylic) acid to the monocarboxylic acid which is free from double bonds that are capable of undergoing addition polymerization is from 0.5 : 0.5 to 0.9 : 0.1.

## Revendications

**1.** Procédé pour la production d'organopolysiloxanes contenant des groupements (méth)acrylate, caractérisé en ce qu'on fixe des siloxanes à fonctionnalité hydrogène de formule générale I

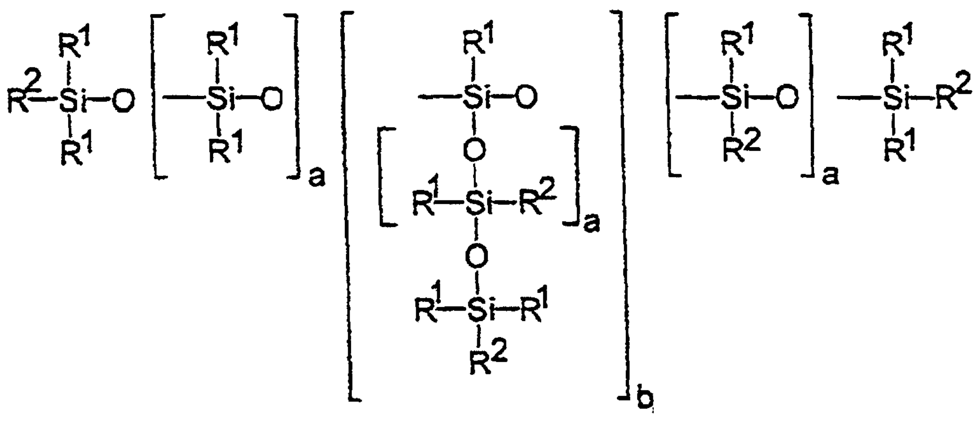

(I)

où

$R^1$ = des radicaux hydrocarbonés identiques ou différents, aliphatiques ou aromatiques, comprenant 1 à 10 atomes de carbone,
$R^2$ = $R^1$ ou H, sous réserve qu'au moins un radical $R^2$ soit égal à H,
a = 0 à 500,
b = 0 à 5,

sur des polyhydroxyalkényléthers de formule générale II

$$H_2C{=}CH\text{-}\ (CH_2)_c\text{-}O\text{-}CH_2\text{-}R^3\text{-}(CH_2\text{-}OH)_d$$

(II)

où

$R^3$ = un radical hydrocarboné linéaire, cyclique, aromatique ou ramifié, contenant le cas échéant des ponts éther, comprenant 1 à 20 atomes de carbone,
c = 0 à 10
d = 2 à 10,

en présence de catalyseurs de platine ou de rhodium de degrés d'oxydation I, II et III et en ce qu'on fait ensuite réagir les groupements OH avec, par rapport aux groupements hydroxyle, des quantités molaires de 0,4 à 1 d'acide (méth)acrylique et des quantités molaires de 0 à 0,6 d'un acide monocarboxylique comprenant 2 à 10 atomes de carbone, qui est exempt de doubles liaisons aptes à la polymérisation, dans des conditions d'estérification usuelles.

**2.** Procédé pour la production d'organopolysiloxanes contenant des groupements (méth)acrylate selon la revendication 1, caractérisé en ce qu'on réalise l'hydrosilylation en présence d'un des catalyseurs du groupe tris(éthylènediamine)rhodium(III), bis(triphénylphosphine)rhodiumcarbonylchlorure; 2,4-[Rh($C_5H_7O_2$)(CO)($PPh_3$)]; 2,4-pentadionatodicarbonyl)rhodium(I); tris (2,4-pentadionate) rhodium (III) ; acétylacétonatobis(éthylène)rhodium(I) ; di-μ-chlorodichlorobis(cyclohexène) diplatine (II) ; di-μ-chlorodichlorobis(éthylène)diplatine(II); 1,1-cyclobutanedicarboxylatodiamineplatine(II) ; dibromo (1,5-cyclooctadiène)platine(II) ; cis-dichlorobis(pyridine)platine(II); dichlorobis(1,5-cyclooctadiène)platine(II); dichloro(dicyclopentadiényle)platine (II).

**3.** Procédé selon la revendication 1, caractérisé en ce que, par rapport aux groupements hydroxyle, le rapport molaire de l'acide (méth)acrylique à l'acide monocarboxylique, qui est exempt de doubles liaisons aptes à la polymérisation, est de 0,5:0,5 à 0,9:0,1.